# EUROPEAN PATENT SPECIFICATION

(11) **EP 3 299 618 B1**
(45) Date of publication and mention of the grant of the patent: **28.09.2022**
(21) Application number: 16796148.1
(22) Date of filing: 25.02.2016
(51) Int. Cl.: F03D 80/30, H05F 3/04

(54) **BLADE FOR WIND TURBINE WITH LIGHTNING SUPPRESSION SYSTEM**
BLATT FÜR WINDKRAFTANLAGE MIT BLITZUNTERDRÜCKUNGSSYSTEM
PALE POUR ÉOLIENNE AVEC SYSTÈME DE SUPPRESSION DE LA FOUDRE

(30) Priority: 18.05.2015 JP 2015101098; 13.07.2015 JP 2015139974
(43) Date of publication of application: 28.03.2018
(73) Proprietor: Lightning Suppression Systems Co., Ltd., Yokohama-shi, Kanagawa 220-8144 (JP)
(72) Inventor: MATSUMOTO, Toshio, Yokohama-shi, Kanagawa 220-8144 (JP)
(74) Representative: dompatent von Kreisler Selting Werner - Partnerschaft von Patent- und Rechtsanwälten mbB
(86) International application number: PCT/JP2016/055708
(87) International publication number: WO 2016/185753

(56) References cited:
- WO-A1-2008/044488
- JP-A- 2008 010 241
- JP-A- 2008 010 241
- US-A1- 2009 139 739
- US-A1- 2010 006 312

## Description

### Technical Field

The present invention relates to a blade for use in a wind power generation apparatus, and in particular concerns a wind power generation apparatus-use blade that can suppress damages caused by a lightning strike.

### Background Art

In general, as one of renewable energy resources, wind power generation energy has been known.

A wind power generation apparatus for generating this wind power generation energy is provided with a tall support pole, a nacelle which is attached to an upper portion of the support pole and in which a power generator is installed, and many blades that are attached to the nacelle for rotary driving the power generator.

This wind power generation apparatus is designed so that by allowing the blades to be rotated by wind and by the rotation of these blades, the power generator is driven to generate power.

In this wind power generation apparatus, in order to efficiently receive wind, a tall support pole is used and the installation position of the blades is set to a high position.

Moreover, in order to increase the power generation amount, the blade is made longer and larger.

In this case, however, in the wind power generation apparatus that is installed at a high place so as to extend upward, a lightning strike tends to occur.

When a lightning strike occurs on a blade, the blade is damaged by its lightning stroke to cause power generation to be no longer obtained.

In view of this problem, conventionally, a countermeasure technique, for example, as shown in the Patent Literature cited below, has been proposed.

In this technique, a configuration is proposed in which a lightning receiving part made of metal is installed at the tip of the blade and a grounding line electrically connected to this lightning receiving part is earthed to ground via the inside of the blade.

Even upon occurrence of a lightning strike toward the wind power generation apparatus, the lightning strike is introduced to the lightning receiving part and received therein, and by allowing the lightning stroke to flow from the lightning receiving part to the ground through the grounding line, the lightning stroke is prevented from passing through the blade so that the blade itself is prevented from being damaged.

### Citation List

### Patent Literature

The following documents are relevant :
Japanese Patent Application 2012-246812 and WO2008/044488 A1.

### Summary of Invention

### Technical Problem

However, in the conventional technique of the above-mentioned Japanese application, the following problems to be solved have been raised.

That is, in a state where the rotation of a blade is stopped, the above-mentioned lightning receiving part is located at a fixed position.

Upon occurrence of a lightning strike toward the blade in this state, the lightning strike is introduced to the lightning receiving part located at the fixed position and received therein and its lightning stroke is discharged to the ground through the grounding line.

However, in the case when the blade is rotating, the linear velocity at its tip, that is, the moving velocity of the lightning receiving part, is fast, it is assumed that the lightning strike toward the blade cannot be introduced to the lightning receiving part.

In this manner, when the lightning strike toward the blade is unable to be introduced to the lightning receiving part, the lightning strike occurs on a portion other than the lightning receiving part of the blade, and the lightning stroke passes through the blade itself and is discharged to the ground through the nacelle and the support pole.

Moreover, it is assumed that by the lightning stroke passing through the blade, the blade is damaged.

This problem is caused by the technical idea that by introducing a lightning strike to a place other than protected subjects of important facilities and equipment so that the subjects to be protected are protected from the lightning stroke caused at the time of the lightning strike.

Therefore, based upon the technical idea for protecting the subject to be protected by suppressing a lightning strike itself onto the vicinity of the protected subject, an object of the present invention is to provide a configuration capable of suppressing a lightning strike onto the blade.

### Solution to Problems

In order to solve the above-mentioned problems, a blade for a wind power generation apparatus of the present invention is characterized in that a structural member made of a conductive material is inserted and attached to the inside of a blade, and a first electrode made of the conductive material is installed on the surface of the blade, with the structural member being electrically insulated from the first electrode so as to form a second electrode that is grounded.

Here, upon observation of the phenomenon of a lightning strike in detail, in the case of a general lightning strike (in summer lightning) that occurs in summer, when thunderclouds mature, stepped leaders come close to the ground from the thunderclouds, while selecting portions in the atmosphere where discharge can easily pass.

When the stepped leaders come close to the ground with a certain degree of distance, upward streamers (accepting discharges) with weak electric currents extend toward the stepped leaders from the ground or buildings (lightning conductors), trees or the like.

When these streamers and stepped leaders are coupled with each other, large currents (feedback currents) are allowed to flow through the paths between the thunderclouds and the ground. This corresponds to the lightning strike phenomenon.

The present invention makes it possible to hardly generate the above-mentioned upward streamers by using the blade having the above-mentioned configuration.

That is, the above-mentioned blade is provided with the first electrode and second electrode that are electrically insulated, with only the second electrode being grounded.

Therefore, for example, when thunderclouds with minus charges being distributed over the cloud base approach, charges reversed to these charges (plus charges) are distributed over the surface of the ground, and attracted by the minus charges on the cloud bases, with the result that plus charges are collected also onto the second electrode.

Then, the first electrode disposed with the insulator interposed therebetween is electrified with the minus charge by the function of a capacitor.

By making the generation of upward streamers less likely to occur on the blade and the periphery thereof by this function, it becomes possible to suppress the occurrence of a lightning strike.

As the conductive material to be coated on the blade, a metal foil may be used, and by pasting this metal foil onto the surface of the blade, the first electrode can be formed.

Further, as the metal foil, an aluminum foil, a stainless thin plate or the like may be used, and in the case of an environment where a vapor deposition technique can be used, the first electrode can be formed by vapor deposition of these metals.

Moreover, a conductive paint may be used as the above-mentioned conductive material, and by applying the conductive paint to the surface of the blade, that is, by forming a coat film thereon, the first electrode may be formed.

Furthermore, a metal plate may be used as the conductive material, and by fastening the metal plate onto the blade, the first electrode may be formed.

On the other hand, in order to electrically insulate the first electrode and the second electrode from each other, an air layer for holding the first electrode and the second electrode in a non-contact state is formed in the blade.

Moreover, by interposing an electrically insulating material between the first electrode and the second electrode, or by forming the blade itself by using an electrically insulating material, the two electrodes can be electrically insulated from each other.

In the case when the blade is not made of an electrically insulating material, since the first electrode is assumed to be grounded through the blade, the corresponding blade needs to be electrically insulated from the first electrode.

In this case, an electrically insulating material may be interpolated between the blade and the first electrode for this purpose.

Furthermore, a configuration may be used in which the first electrode and the second electrode are maintained with a fixed interval by a spacer formed into a cylindrical shape by using an inorganic baked member so as to be set in an electrically insulated state, and the first electrode and the second electrode are provided with protrusions that are inserted into the spacers from the respective ends thereof, and made face to face with each other with a fixed interval therebetween.

With this configuration, even in the case of occurrence of a lightning strike onto the blade, a high-temperature arc discharge is generated between the protrusions, thereby making it possible to prevent damages from occurring in the blade.

Moreover, the first electrode may be formed on the surface of the blade on the windward side, or may be formed around all the peripheral surface of the tip end of the blade.

By forming such a configuration, the above-mentioned lightning suppressive function can be concentrated onto a portion that is more susceptible to the occurrence of a lightning strike.

As the structural members, the configuration may be made by including the plurality of reinforcing frames having conductivity that are installed on the inner surface of the above-mentioned blade.

### Advantageous Effects of Invention

In accordance with the blade for the wind power generation apparatus of the present invention, by the first electrode and second electrode insulated from each other and installed on the blade, the generation of streamers around the wind power generation apparatus can be suppressed so that the occurrence of a lightning strike can be suppressed.

### Brief Description of Drawings

Fig. 1 is a front view showing a wind power generation apparatus to which a first embodiment of the present invention is applied.

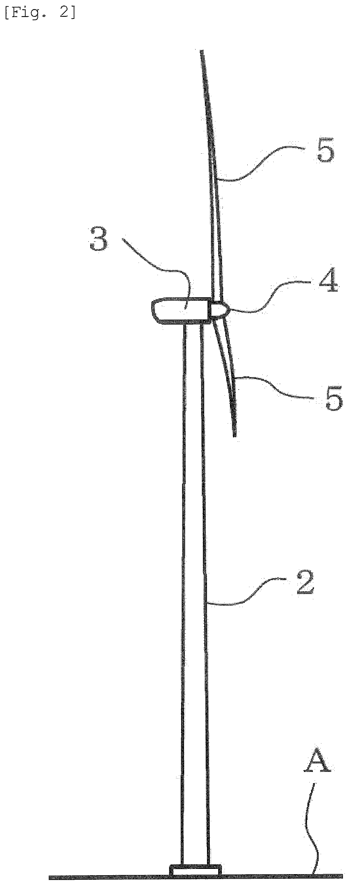

Fig. 2 is a side view showing the wind power generation apparatus to which the first embodiment of the present invention is applied.
Fig. 3, which shows the first embodiment, is a front view showing a disassembled state of a blade.
Fig. 4, which shows the first embodiment, is an enlarged front view of the blade.
Fig. 5, which shows the first embodiment, is a cross-sectional view taken along line V-V of Fig. 4.
Fig. 6 is a side view showing a wind power generation apparatus to which a second embodiment of the present invention is applied.
Fig. 7 is a front view showing a blade portion of the wind power generation apparatus to which the second embodiment is applied.
Fig. 8, which shows the second embodiment of the present invention, is an enlarged front view of the blade.
Fig. 9, which shows the second embodiment of the present invention, is a cross-sectional view taken along IX-IX line of Fig. 8.
Fig. 10, which shows a sequence of processes for producing the blade in accordance with the second embodiment of the present invention, is an enlarged front view of an existing blade.
Fig. 11, which shows a sequence of processes for producing the blade in accordance with the second embodiment of the present invention, is an enlarged front view of a blade.
Fig. 12, which shows a sequence of processes for producing the blade in accordance with the second embodiment of the present invention, is an enlarged front view of the blade.
Fig. 13, which shows a sequence of processes for producing the blade in accordance with the second embodiment of the present invention, is an enlarged front view of the blade.
Fig. 14, which shows a sequence of processes for producing the blade in accordance with the second embodiment of the present invention, is an enlarged front view of the blade.
Fig. 15, which shows a sequence of processes for producing the blade in accordance with the second embodiment of the present invention, is an enlarged front view of the blade.
Fig. 16, which shows a third embodiment of the present invention, is an enlarged longitudinal cross-sectional view of a blade.
Fig. 17 is a view that explains a principle by which a blade surface (first electrode) in accordance with embodiments of the present invention is negatively charged.

### Description of Embodiments

Referring to drawings, the following description will explain one embodiment of the present invention.

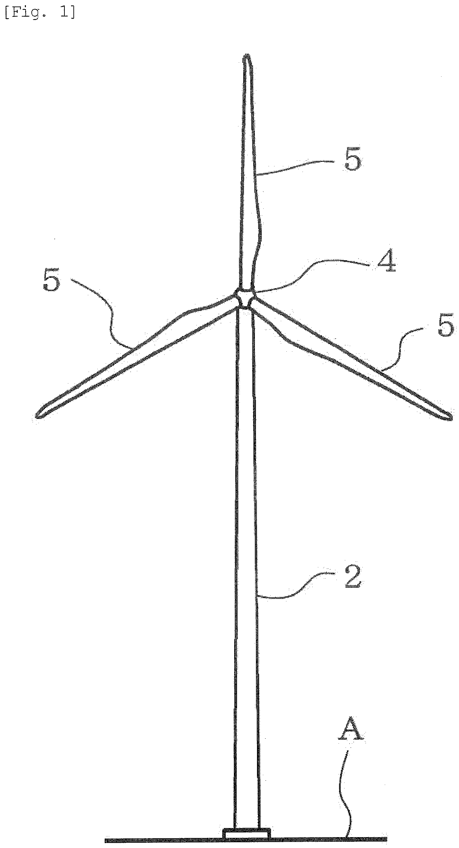

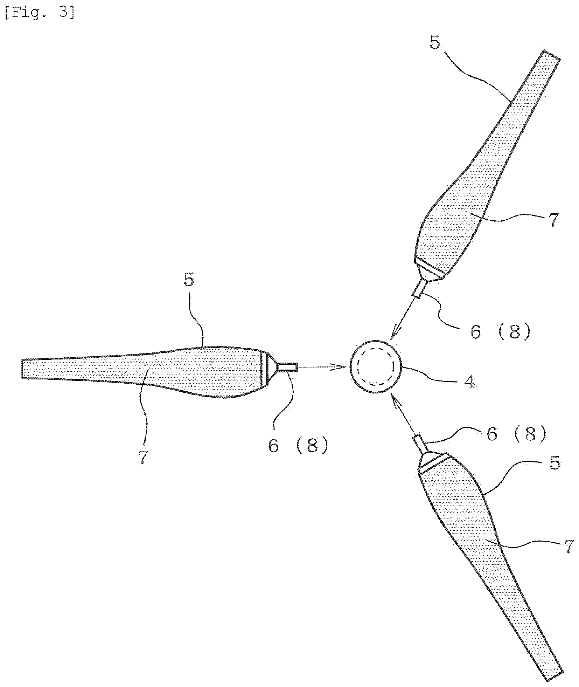

In Fig. 1, reference numeral 1 represents a wind power generation apparatus to which the present embodiment is applied, and this wind power generation apparatus 1 is constituted by a support pole 2 disposed upright on the ground A, a nacelle 3 attached to the upper portion of the support pole 2, and as shown in Fig. 3, three blades 5 relating to the present embodiment, which are attached to a boss 4 disposed inside the nacelle 3.

Thus, the respective blades 5 are connected to a generator (not shown) attached to the inside of the nacelle 3 through the boss 4, and by allowing the blades 5 to be rotated by receiving wind, the generator is driven to generate power.

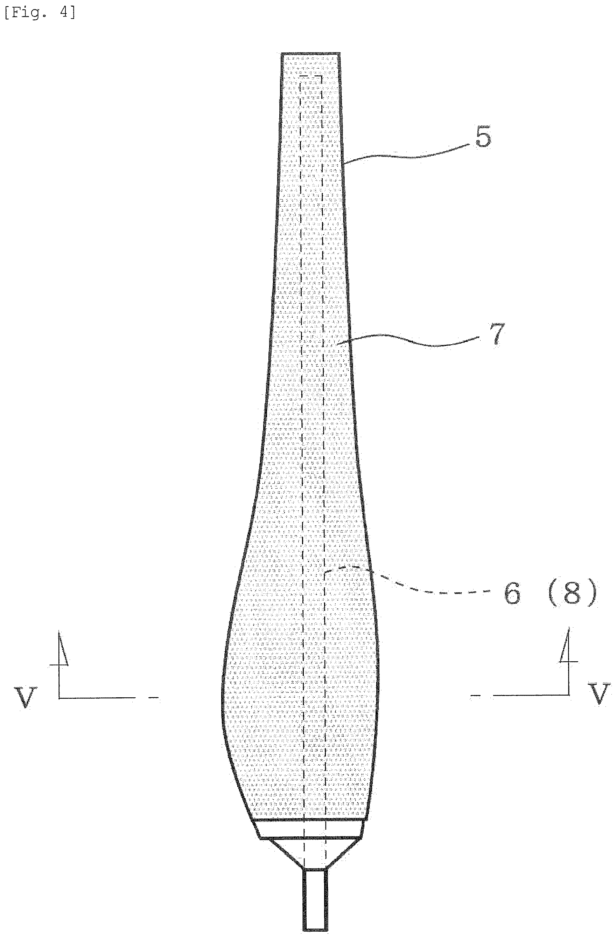

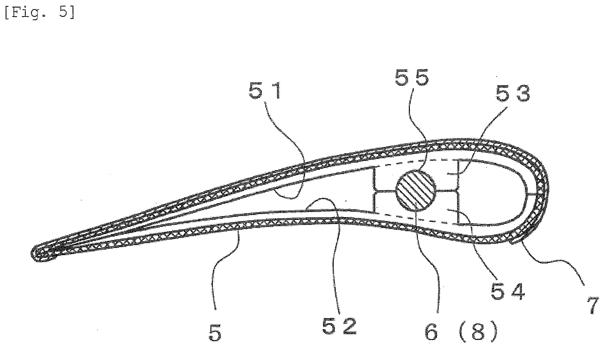

The blade 5 relating to the present embodiment is formed by using a non-conductive material, and as shown in Fig. 4 and Fig. 5, a structural member 6 made of a conductive material is inserted and attached to the inside thereof.

At positions opposed to each other on the inner surface of the blade 5, reinforcing frames 51 and 52 that extend in the lateral directions are installed. With respect to these reinforcing frames 51 and 52, a plurality of them are installed in the length directions of the blade 5, with intervals being spaced therein. These reinforcing frames 51 and 52 protrude from the inner surfaces of the blade 5, and each of them is formed in a rib state extending along the inner peripheral surface. Thus, the reinforcing frames 51 have a function for supporting portions on the windward side of the blade 5 from the inner surface, and the reinforcing frames 52 exert a function for supporting the leeward side of the blade 5 from the inner surface.

The reinforcing frames 51 and 52 are provided with abutting portions 53 and 54 that protrude in thickness directions of the blade 5. Moreover, in the center of each of the abutting portions 53 and 54, a hole 55 that allows the structural member 6 to penetrate the blade 5 in the length direction is formed.

These reinforcing frames 51 and 52 may be formed integrally with the blade 5, or may be formed as separate members and made to be integrally formed with the blade 5 by using coupling means such as adhesion, screwing means or the like.

Moreover, a first electrode 7 is formed on the surface of the blade 5 by coating thereon with a conductive material.

Furthermore, the structural member 6 is electrically grounded through another structural member of the wind power generation apparatus 1, so as to be formed into a second electrode 8 insulated from the first electrode 7.

The first electrode 7 is formed in a manner so as to cover the leading edge and the trailing edge of the blade 5, as well as the surface (receiving surface of wind) of the blade 5.

Moreover, the first electrode 7 is formed on the base side (joined portion side of the nacelle 3) of the blade 5 so as to be separated from another metal member with a predetermined distance or more.

The structural member 6 is inserted and fixed over the entire length of the blade 5, and is designed to ensure the strength of the blade 5 by supporting the blade 5 from its inside.

Furthermore, the structural member 6 is allowed to protrude from the base end of the blade 5 so as to form a coupling portion with the boss 4.

Thus, the structural member 6 (second electrode 8) coupled to the boss 4 is grounded through the boss 4, as well as through conductive members, such as the power generator, support pole 2, or the like, forming the wind power generation apparatus 1.

The blade 5 of the present embodiment constituted in this manner functions such that, when thunderclouds with minus charges being distributed over the cloud base approach, charges reversed to these charges (plus charges) are distributed over the surface of the ground, and attracted by the minus charges on the cloud bases, with the result that plus charges are also collected to the second electrode 8.

On the other hand, the first electrode 7 disposed with the insulating member interposed therebetween is electrified with the minus charge by the function of a capacitor.

By this function, upward streamers are hardly generated on the blade 5 and the periphery thereof so that the occurrence of a lightning strike is suppressed.

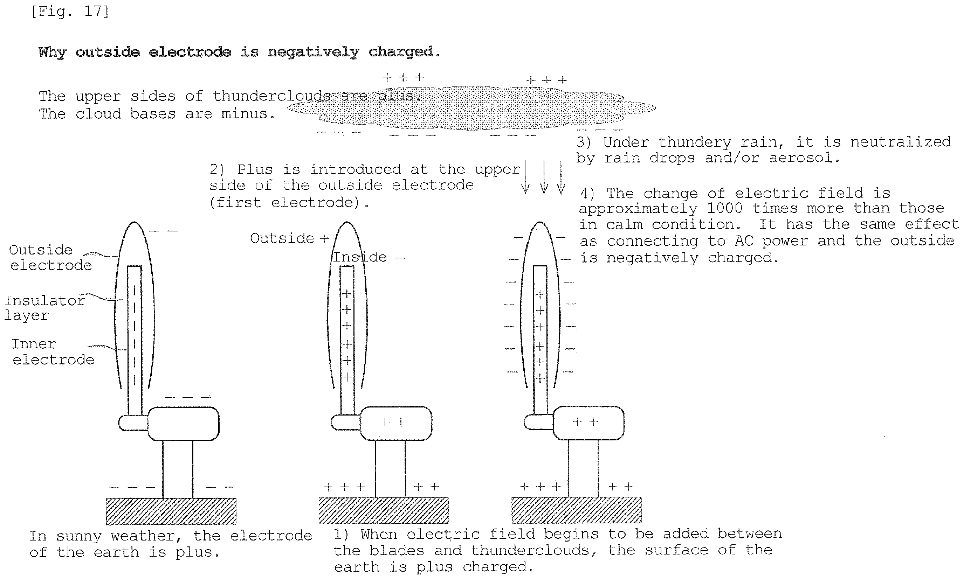

Fig. 17 is a view that explains a principle by which the blade surface (first electrode) is electrified with the minus charge.

When the process in which the first electrode 7 is electrified with the minus charge is considered, the process is considered to be caused by the following phenomenon.

When plus charges are attracted by the minus charges of the cloud bases, and accumulated on the second electrode 8, the plus charges are also distributed on the surface of the second electrode 8. At this time, as the minus charges are accumulated on the surface of the first electrode 7 on the second electrode 8 side, plus charges are also accumulated on the outside surface (blade surface) of the first electrode 7. In this case, many rain drops and fine particles charged in minus are located in the atmosphere, and since the plus charges on the outside surface of the first electrode 7 are small amount of plus charges, these charges are neutralized with the result that thereafter, the electrode is electrified with minus charges. This phenomenon in which the charges on the outside surface of the first electrode 7 are changed from plus to minus takes place in a very short period of time, and thereafter, minus charges are considered to be exerted.

By this function, upward streamers on the blade 5 and the periphery thereof hardly occur, thereby making it possible to suppress the occurrence of a lightning strike.

This suppressive function to the occurrence of upward streamers can be maintained even in the case when the blade 5 is rotated.

Therefore, in both of states in which the blade 5 is stopped and the blade 5 is rotated, it is possible to suppress a lightning strike onto the blade 5.

With this arrangement, the stability of the blade 5, more specifically, the stability of the wind power generation apparatus 1, can be greatly enhanced.

Additionally, as the conductive material to be coated on the blade 5, for example, a metal foil of aluminum, stainless, or the like, may be used, and the metal foil may be pasted onto the surface of the blade 5 so as to form the first electrode 7.

Alternatively, by fixing the above-mentioned metal onto the surface of the blade 5 by vapor deposition, the first electrode 7 may be formed.

Moreover, a conductive paint may be used as the conductive material to be coated on the blade 5, and by applying the conductive paint onto the surface of the blade 5 so as to form a conductive coat film, the first electrode 7 may be formed.

Additionally, with respect to the reinforcing frames 51 and 52, by applying the conductive paint onto the entire surfaces thereof to form coat films, and these may be electrically connected to the structural member 6. Furthermore, the reinforcing frames 51 and 52 themselves may be formed by using a conductive metal. With this arrangement, the reinforcing frames 51 and 52 may also be utilized as the second electrode together with the structural member 6. Thus, the second electrode can be expanded along the inner surface of the blade 5 so as to shorten a distance from the first electrode.

Moreover, a conductive layer may be formed on the entire inner surface of the blade 5 so that the conductive layer may be utilized as the second electrode. As the method for forming this conductive layer, the following methods may be used: a method for forming a conductive coat film by applying a conductive paint onto the entire inner surface of the blade 5, a method for pasting a conductive metal foil thereto, a method in which metal vapor deposition is used, a method for pasting a conductive metal plate thereto, and the like. With this arrangement, the second electrode can be expanded over the entire inner surface of the blade 5 so that the distances from the first electrode can be shortened, and can be set to substantially uniform distances.

Furthermore, on the inner surface of the blade 5, a longitudinal reinforcing frame (not shown) that extends in the length directions of the blade 5 may be installed. In the same manner as in the reinforcing frames 51 and 52 extending in lateral directions, this longitudinal reinforcing frame may be designed so that a conductive layer is formed on the surface thereof, or the frame itself may be formed by a conductive metal plate. In this manner, by installing the conductive longitudinal reinforcing frame, the structural strength of the entire blade 5 can be improved, and the plural reinforcing frames 51 and 52 disposed with intervals in the length direction of the blade 5 can be electrically connected. Further, the structural member 6 can also be miniaturized.

Additionally, the first electrode and second electrode are preferably formed at positions mutually opposed to each other, and the areas thereof are preferably made as large as possible. However, from the viewpoints of production costs and light weight of the blade 5, the areas need not be made larger more than required. For example, as shown in Fig. 5, the first electrode 7 may be formed only on the windward side of the blade 5. In this case, the second electrode 8 can be formed only on a portion corresponding to the first electrode 7 on the inner surface of the blade 5.

Furthermore, the structural member 6 may be constituted by including the plural reinforcing members 51 and 52 formed on the inner surface of the blade 5 and the longitudinal reinforcing frame, and a configuration in which the respective reinforcing frames 51 and 52 are grounded through the longitudinal reinforcing frame may be adopted.

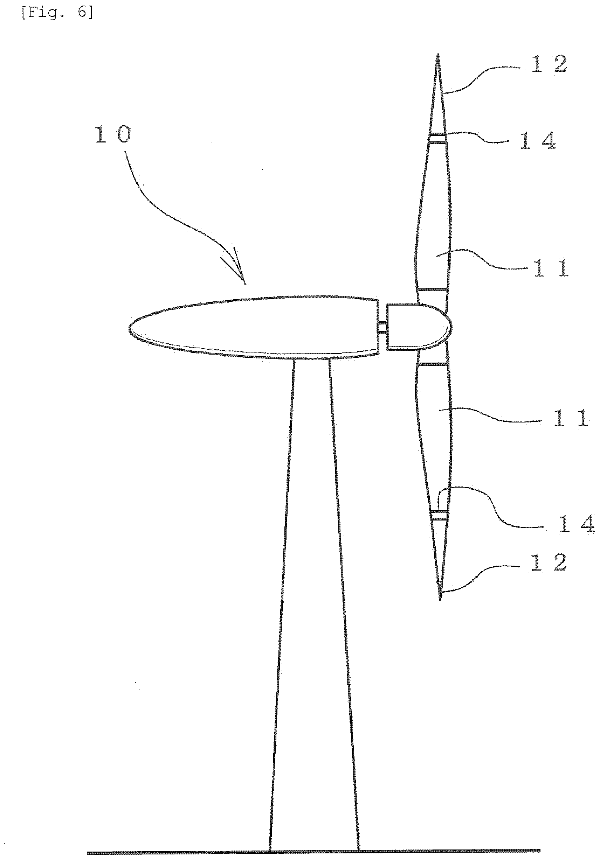

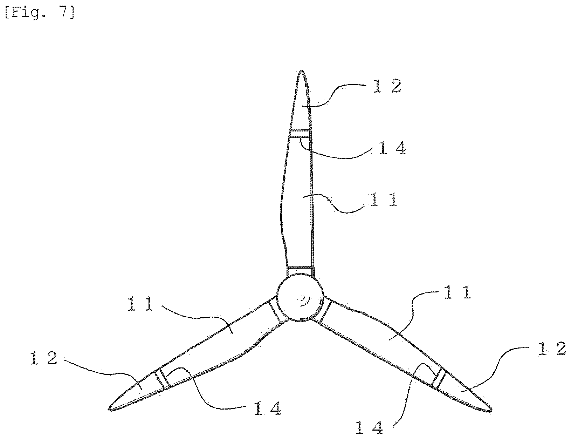

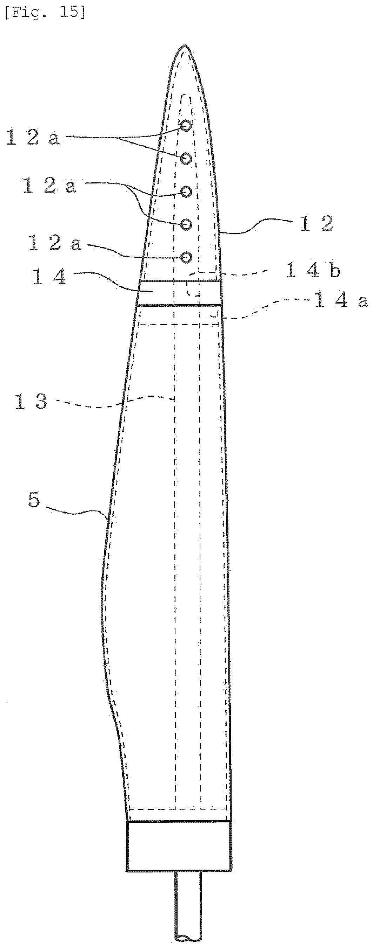

Figs. 6 to 15 show a second embodiment of the present invention, and in these drawings, reference numeral 10 shows a wind power generation apparatus to which the present embodiment is applied.

A blade 11 of the present embodiment to be used in the wind power generation apparatus 10 has a structure in which a first electrode 12 is formed in a manner so as to cover the outer periphery of the tip end thereof.

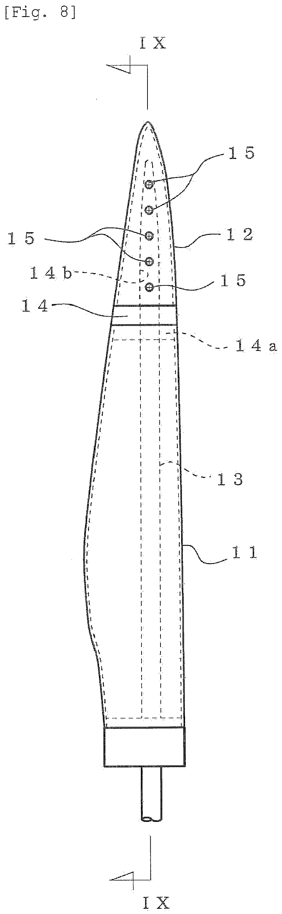

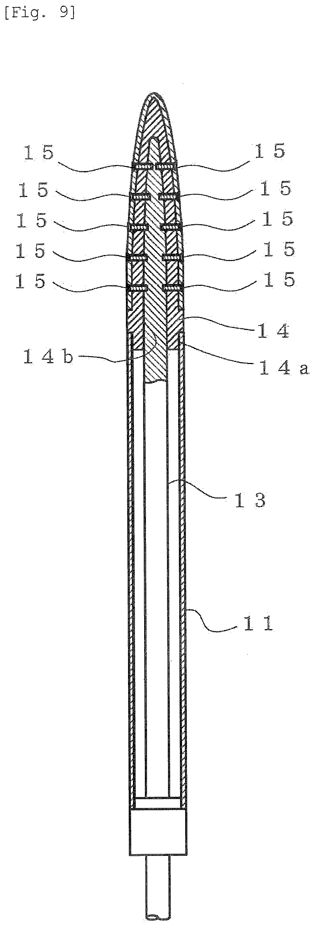

More specifically, as shown in Figs. 8 and 9, the first electrode 12 is formed into a cap shape by using metal, and its outside shape is formed into the tip end shape of the blade 11.

The above-mentioned blade 11 is designed to have a shape in which the tip end of an existing blade is cut off, and the tip end of the second electrode 13 inserted and fixed inside thereof is allowed to protrude at the cut-off position of the blade 11.

Moreover, onto the cut-off portion of the blade 11, an insulating member 14 having an outside shape similarly reduced from the outside shape of the first electrode 12 is disposed.

On the base end of this insulating member 14, a fitting step portion 14a to be fitted into the cut-off portion of the tip end of the blade 11 is formed, and through this fitting step portion 14a, the insulating member 14 is fitted to the tip end of the blade 11.

Furthermore, inside the insulating member 14, a hole 14b to which a protruding end of the second electrode 13 is fitted is formed from the end face on the side where the fitting step portion 14a is formed toward the inside thereof.

On the other hand, the inside of the first electrode 12 is formed into substantially the same shape as the outside shape of the insulating member 14, and is designed to be entirely made in close-contact with the insulating member 14, when covered and fitted onto the insulating member 14.

Moreover, in Figs. 8 and 9, reference numeral 15 represents a bolt formed by an inorganic baked member (ceramic material).

The bolt 15 penetrates the first electrode 12 and the insulating member 14 to which the first electrode 12 is fitted, and is threadedly engaged with the second electrode 13 located inside the insulating member 14.

Thus, the first electrode 12 and the second electrode 13 are secured in an insulated state through the insulating member 14.

Moreover, the first electrode 12 and the insulating member 14 are integrated with the blade 11, with the second electrode 13 interposed therebetween.

Furthermore, since the insulating member 14 is also interposed between the blade 11 and the first electrode 12, electrical insulation between these can be ensured.

In the blade 11 of the present embodiment having the above-mentioned configuration also, by allowing the surface of the first electrode 12 to be negatively charged, the generation suppressing function of upward streamers is exerted so that it becomes possible to suppress the occurrence of a lightning strike onto the blade 11.

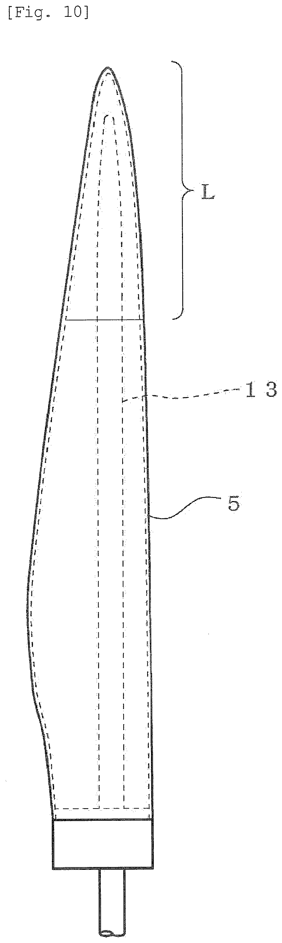

Next, referring to Figs. 10 to 15, the following description will explain a sequence of production processes of the blade 11 in accordance with the present embodiment.

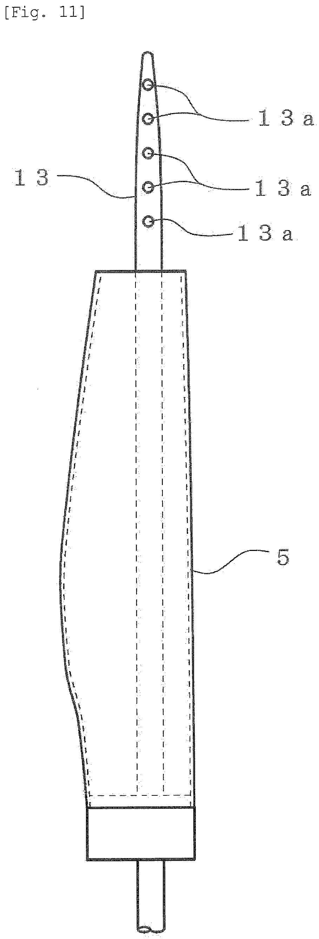

First, the tip end L (see Fig. 10) of an existing blade 5 is cut off, and as shown in Fig. 11, the tip end of the second electrode 13 inserted and attached to the inside thereof is exposed.

In this case, on the side face of the second electrode 13, a screw hole 13a for use in threadedly engaging the bolt 15 is preliminarily formed.

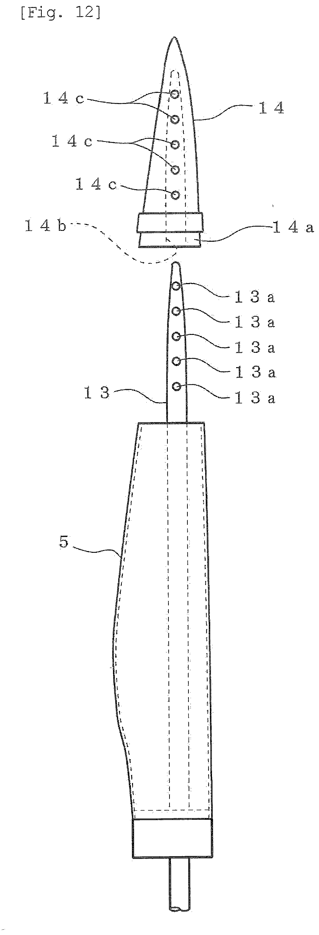

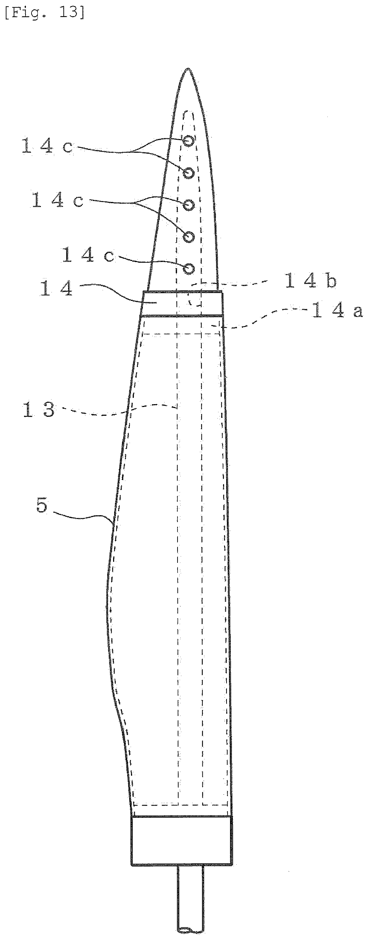

Next, as shown in Fig. 12, with a through hole 14c being formed at a position coincident with the screw hole 13 in the insulating member 14, the insulating member 14 is inserted and attached to the cut-off tip end of the blade 5 by utilizing the fitting step portion 14a, while covering the second electrode 13 to be fitted thereto, as shown in Fig. 13.

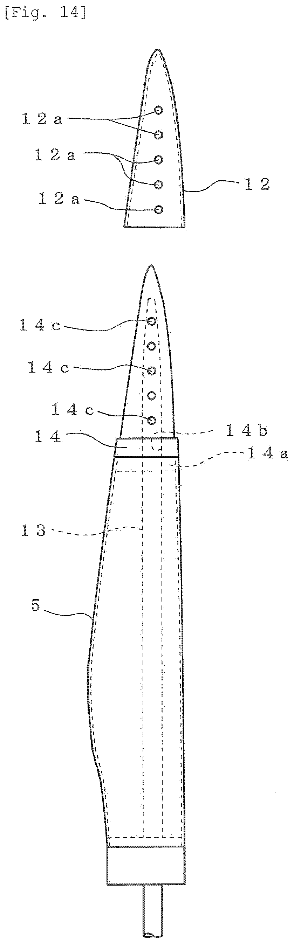

Moreover, as shown in Fig. 14, the first electrode 12 on which the through hole 12a that is coincident with the through hole 14c formed in the insulating member 14 is fitted over the insulating member 14.

Next, the bolts 15 are inserted into the respective through holes 12a of the first electrode 12, and by threadedly engaging the bolts 15 with the respective screw holes 12a of the second electrode 13, the insulating member 14 and the first electrode 12 are assembled onto the existing blade 5 through second electrode 13, as shown in Fig. 8 and Fig. 9, so that a blade 11 in accordance with the present embodiment is produced.

By using this production method, to the existing blade 5, the present embodiment can be applied by using the number of processes as small as possible.

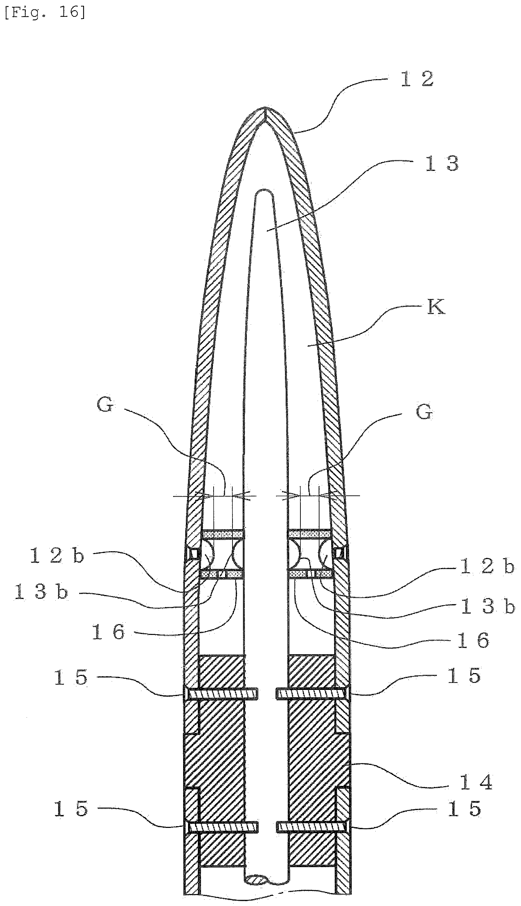

Fig. 16 shows a third embodiment of the present invention.

In this embodiment, by further applying a modification to the insulating member 14 of the aforementioned second embodiment, a configuration in which the second electrode 13 is exposed inside the first electrode 12 is provided.

With this configuration, an air layer K is formed between the first electrode 12 and the second electrode 13, and by this air layer K, the first electrode 12 and the second electrode 13 can be electrically insulated from each other.

Moreover, in the present embodiment, between the first electrode 12 and the second electrode 13, a spacer 16, which is formed into a cylindrical shape by using an inorganic baked member (ceramic member), is interposed, and in the first electrode 12 and the second electrode 13, protruding portions 12b and 13b that protrude from the respective end portions into the spacer 16 are formed.

Furthermore, the respective protruding portions 12b and 13b are opposed to each other with a fixed air gap G being maintained by the spacer 16.

With this configuration, even in the case of occurrence of a lightning strike onto the blade 11, a high-temperature arc discharge is generated between the protrusions 12b and 13b so that damages to the inside of the blade can be prevented.

Additionally, the shapes, dimensions or the like of the respective constituent members shown in the respective embodiments are exemplary only, and various modifications may be made therein depending on designing requirements or the like.

### Reference Signs List

- 1: wind power generation apparatus
- 2: support pole
- 3: nacelle
- 4: boss
- 5: blade
- 6: structural member
- 7: first electrode
- 8: second electrode
- 10: wind power generation apparatus
- 11: blade
- 12: first electrode
- 12a: through hole
- 13: second electrode
- 13a: screw hole
- 14: insulating member
- 14a: fitting step portion
- 14b: hole
- 14c: through hole
- 15: (ceramic) bolt
- 16: spacer
- A: ground
- K: air layer

## Claims

1. A blade (5) for a wind power generation apparatus (1) comprising:
a structural member (6) made of a conductive material inserted and attached therein; and **characterised by**
a first electrode (7) made of a conductive material formed on a surface of the blade (5),
wherein the structural member (6) is electrically insulated from the first electrode (7) and formed into a second electrode (8) earthed to ground.

2. The blade (5) for a wind power generation apparatus (1) according to claim 1, wherein the conductive material forming the first electrode (7) is a metal foil.

3. The blade (5) for a wind power generation apparatus (1) according to claim 1, wherein the conductive material forming the first electrode (7) is a coat film made of a conductive paint.

4. The blade (5) for a wind power generation apparatus (1) according to claim 1, wherein the conductive material forming the first electrode (7) is a metal plate.

5. The blade (5) for a wind power generation apparatus (1) according to any one of claims 1 to 4, wherein the first electrode (7) and the second electrode (8) are electrically insulated from each other by an air layer (K) formed inside the blade (5).

6. The blade (5) for a wind power generation apparatus (1) according to any one of claims 1 to 4, wherein the first electrode (7) and the second electrode (8) are electrically insulated from each other by an electric insulating material interposed between the electrodes.

7. The blade (5) for a wind power generation apparatus (1) according to any one of claims 1 to 4, wherein since the blade (5) is formed by an electric insulating material, the first electrode (7) and the second electrode (8) are electrically insulated from each other.

8. The blade (5) for a wind power generation apparatus (1) according to any one of claims 1 to 7, wherein the first electrode (7) and the second electrode (8) are maintained with fixed intervals by spacers (16) that are formed into a cylindrical shape by using an inorganic baked member, and the first electrode (7) and the second electrode (8) are respectively provided with protrusions that are inserted into the spacers (16) from the respective ends thereof and made face to face with each other with a fixed interval.

9. The blade (5) for a wind power generation apparatus (1) according to any one of claims 1 to 8, wherein the first electrode (7) is formed on a surface on a windward side of the blade (5).

10. The blade (5) for a wind power generation apparatus (1) according to any one of claims 1 to 8, wherein the first electrode (7) is formed over an entire periphery of a tip end of the blade (5).

11. The blade (5) for a wind power generation apparatus (1) according to any one of claims 1 to 7, wherein the structural member (6) includes a plurality of conductive reinforcing frames (51,52) formed on an inner surface of the blade (5).

## Patentansprüche

1. Blatt (5) für eine Windkraftanlage (1), umfassend:
ein Strukturelement (6), das aus einem leitfähigen Material besteht und darin eingesteckt und befestigt ist; und
eine erste Elektrode (7), die aus einem leitfähigen Material besteht und auf einer Fläche des Blattes (5) ausgebildet ist,
wobei das Strukturelement (6) gegenüber der ersten Elektrode (7) elektrisch isoliert ist und zu einer zweiten Elektrode (8), die geerdet ist, verarbeitet ist.

2. Blatt (5) für eine Windkraftanlage (1) gemäß Anspruch 1, wobei das leitfähige Material, das die erste Elektrode (7) bildet, eine Metallfolie ist.

3. Blatt (5) für eine Windkraftanlage (1) gemäß Anspruch 1, wobei das leitfähige Material, das die erste Elektrode (7) bildet, ein Überzug ist, der aus einem leitfähigen Lack besteht.

4. Blatt (5) für eine Windkraftanlage (1) gemäß Anspruch 1, wobei das leitfähige Material, das die erste Elektrode (7) bildet, ein Metallblech ist.

5. Blatt (5) für eine Windkraftanlage (1) gemäß einem der Ansprüche 1 bis 4, wobei die erste Elektrode (7) und die zweite Elektrode (8) durch eine Luftschicht (K), die innerhalb des Blattes (5) ausgebildet ist, elektrisch voneinander isoliert sind.

6. Blatt (5) für eine Windkraftanlage (1) gemäß einem der Ansprüche 1 bis 4, wobei die erste Elektrode (7) und die zweite Elektrode (8) durch ein elektrisch isolierendes Material, das sich zwischen den Elektroden befindet, elektrisch voneinander isoliert sind.

7. Blatt (5) für eine Windkraftanlage (1) gemäß einem der Ansprüche 1 bis 4, wobei die erste Elektrode (7) und die zweite Elektrode (8) elektrisch voneinander isoliert sind, weil das Blatt (5) aus einem elektrisch isolierenden Material besteht.

8. Blatt (5) für eine Windkraftanlage (1) gemäß einem der Ansprüche 1 bis 7, wobei die erste Elektrode (7) und die zweite Elektrode (8) durch Spacer (16), die unter Verwendung eines anorganischen gebrannten Elements in eine zylindrische Form gebracht werden, in festen Abständen gehalten werden und die erste Elektrode (7) und die zweite Elektrode (8) jeweils mit Vorsprüngen versehen sind, die von den jeweiligen Enden her in die Spacer (16) eingesteckt werden und in einem festen Abstand einander gegenüber zu liegen kommen.

9. Blatt (5) für eine Windkraftanlage (1) gemäß einem der Ansprüche 1 bis 8, wobei die erste Elektrode (7) auf einer Fläche einer windzugewandten Seite des Blattes (5) ausgebildet ist.

10. Blatt (5) für eine Windkraftanlage (1) gemäß einem der Ansprüche 1 bis 8, wobei die erste Elektrode (7) über einen ganzen Rand einer Spitze des Blattes (5) ausgebildet ist.

11. Blatt (5) für eine Windkraftanlage (1) gemäß einem der Ansprüche 1 bis 7, wobei das Strukturelement (6) eine Vielzahl von leitfähigen Verstärkungsrahmen (51, 52) umfasst, die auf einer Innenfläche des Blattes (5) ausgebildet sind.

## Revendications

1. Pale (5) pour un aérogénérateur (1), comprenant :
un élément structurel (6) consistant en un matériau conducteur inséré et attaché dedans, et
une première électrode (7) consistant en un matériau conducteur formé sur une surface de la pale (5),
dans laquelle ledit élément structurel (6) est isolé électriquement de la première électrode (7) et formé en une seconde électrode (8) mise à la terre.

2. Pale (5) pour un aérogénérateur (1) selon la revendication 1, dans laquelle ledit matériau conducteur formant la première électrode (7) est une feuille métallique.

3. Pale (5) pour un aérogénérateur (1) selon la revendication 1, dans laquelle ledit matériau conducteur formant la première électrode (7) est une couche de revêtement consistant en un vernis conducteur.

4. Pale (5) pour un aérogénérateur (1) selon la revendication 1, dans laquelle ledit matériau conducteur formant la première électrode (7) est une plaque métallique.

5. Pale (5) pour un aérogénérateur (1) selon l'une quelconque des revendications 1 à 4, dans laquelle la première électrode (7) et la seconde électrode (8) sont isolées électriquement l'une de l'autre par une couche d'air (K) formée au sein de la pale (5).

6. Pale (5) pour un aérogénérateur (1) selon l'une quelconque des revendications 1 à 4, dans laquelle la première électrode (7) et la seconde électrode (8) sont isolées électriquement l'une de l'autre par un matériau d'isolation électrique situé entre les deux électrodes.

7. Pale (5) pour un aérogénérateur (1) selon l'une quelconque des revendications 1 à 4, dans laquelle la première électrode (7) et la seconde électrode (8) sont isolées électriquement l'une de l'autre parce que la pale (5) est formée d'un matériau d'isolation électrique.

8. Pale (5) pour un aérogénérateur (1) selon l'une quelconque des revendications 1 à 7, dans laquelle la première électrode (7) et la seconde électrode (8) sont maintenues à intervalles fixes au moyen d'espaceurs (16) qui sont mis dans une forme cylindrique en utilisant un élément cuit inorganique, et la première électrode (7) et la seconde électrode (8) sont respectivement pourvues de saillies qui sont insérées dans les espaceurs (16) à partir de leurs extrémités respectives, et disposées opposées l'une à l'autre avec un intervalle fixe.

9. Pale (5) pour un aérogénérateur (1) selon l'une quelconque des revendications 1 à 8, dans laquelle la première électrode (7) est formée sur une surface du côté ventilé de la pale (5).

10. Pale (5) pour un aérogénérateur (1) selon l'une quelconque des revendications 1 à 8, dans laquelle la première électrode (7) est formée sur une périphérie entière d'une extrémité de pointe de la pale (5).

11. Pale (5) pour un aérogénérateur (1) selon l'une quelconque des revendications 1 à 7, dans laquelle ledit élément structurel (6) comprend une pluralité de cadres de renfort conducteurs (51, 52) formés sur une surface intérieure de la pale (5).
